# EUROPEAN PATENT SPECIFICATION

(11) **EP 1 364 776 B1**
(45) Date of publication and mention of the grant of the patent: **11.07.2007**
(21) Application number: 02380102.0
(22) Date of filing: 21.05.2002
(51) Int. Cl.: B32B 27/04, B44C 5/04

(54) **Decorative board**
Dekorplatte
Panneau décoratif

(43) Date of publication of application: 26.11.2003
(73) Proprietor: Lloveras Calvo, Juan, 08182 San Feliu de Codinas (ES)
(72) Inventor: Lloveras Calvo, Juan, 08182 San Feliu de Codinas (ES)
(74) Representative: Esteban Perez-Serrano, Maria Isabel

(56) References cited:
- EP-A- 0 015 316
- EP-A- 0 549 213
- DE-B- 2 044 607

## Description

### OBJECT OF THE INVENTION

The present invention relates to a decorative board of among the boards that are used for the compartmenting of rooms, use on work tops and furniture, as well as in doors or other elements that require the use of opaque or translucent surfaces.

This board is characterised in the use of a fine decorative laminate printed and impregnated with resin bonded by means of a press to a support constituted by a transparent thermoset or thermoplastic sheet.

It is characterised in the optional use of a second opaque or transparent laminate that increases the thickness of the final board as in the case of thin boards in which deformations would take place after leaving the press.

### BACKGROUND OF THE INVENTION

Different types of board are known for decorative use in the making of furniture.

In said board recourse is habitually had to wood veneer to obtain a wood finish, the strengthening core of the board being a more economical material like chipboard.

Even in these cases, the application of the wood laminate for the veneer is very expensive and it requires great care in its preparation and application.

Other means of constructing boards are known like that described in the Spanish Utility Model with publication number ES1041598U in which a multi-layer board is described for furniture, based on a double laminate, the interior of greater thickness and in different materials, and the exterior very thin and of wood.

In this Utility Model the external laminate is in all cases of wood, and variants are allowed in the substrate laminate.

The exterior wood requires treatment characteristic of wood with regard to the use of varnishes or treatments that give the desired aspect.

The Spanish Utility Model with publication number ES1044790U describes a multi-laminate sheet for lamps and other luminaires.

The sheet of this utility model is translucent to allow light to pass at the same time as this adopts the colour and the degree of diffusion that are contributed by the different layers of which it is formed.

This sheet is formed starting from several laminates, at least one double laminate with the interior of greater thickness and in different plastic materials, and the exterior of very fine wood that may have a film of external finish or not.

The present invention consists of a board with a final finish that simulates a finish like that of wood without making use of wooden laminates.
[0013a] It is known in the State of the Art the existence of the decorative layer disclosed in EP 15316 where is disclosed a multilayer board which comprises a decorative layer printed with decorative motifs and impregnated with resin, a support laminate on its underside.
[0013b] In EP 549213 is also disclosed a hybrid laminated prepreg which comprises a resin layer, a decorative layer laminated thereon and having decoration on it and a transparent prepreg layer laminated on the decorative layer.

### DESCRIPTION OF THE INVENTION

The present invention refers to a decorative board of among the multi-laminate boards, constituted by a strengthening support plus a finishing laminate.

The innovation of this invention is the use of a very fine laminate that replaces the very expensive wood laminate, an improved aspect being achieved having the appearance of varnish.

Not only is a quality external aspect obtained, but also the cost of using this laminate in comparison with the cost of using a wood laminate, is much less.

This laminate is constituted mainly by porous cellulose or synthetic fibre mats (term commonly used in the polyester industry to designate unwoven laminates that show a certain degree of meshing within their thickness, and in this sense it will be employed throughout this document) on which an image is printed.

The image habitually employed is that of wood grain in order to simulate a wooden board; however, falling within the scope of this same invention is the use of other design motifs.

The printed laminate of cellulose or of synthetic fibre mats is impregnated with melamine resin and rests on a transparent thermoset or thermoplastic sheet.

The assembly passes through a press with the fusion temperature of melamine so that the laminate is made to adhere and has the shine contributed by the resin.

This fusion establishes a very tight bond between the decorative laminate and the plastic sheet since an intermediate area exists in which a certain degree of diffusion takes place between the two materials.

The board that is obtained allows light to pass for which reason it can be employed in surfaces which, when illuminated, contribute an attenuated and diffuse light that affects the decorative environment.

At the same time as the plastic laminate is pressed with the upper laminate of cellulose or of synthetic fibre mats, it is possible to incorporate an additional under-sheet to achieve greater structural stability.

The increment of the structural stability is due to the increased thickness and is applied when the thickness without this last laminate is not enough to prevent deformations occurring on leaving the press.

In this case, only the motif printed on the seen exterior sheet of cellulose or of synthetic fibre mats and the total thickness of the board is relevant, wherein the printed laminate is the element responsible for the final aspect of the surface of the board.

The bond between this opaque second sheet and the plastic first one can be implemented also by incorporating melamine resin or making use of other adhesives.

### DESCRIPTION OF THE DRAWINGS

The present descriptive specification is completed with drawing, which illustrates the preferred embodiment of the invention and is in no way restrictive.

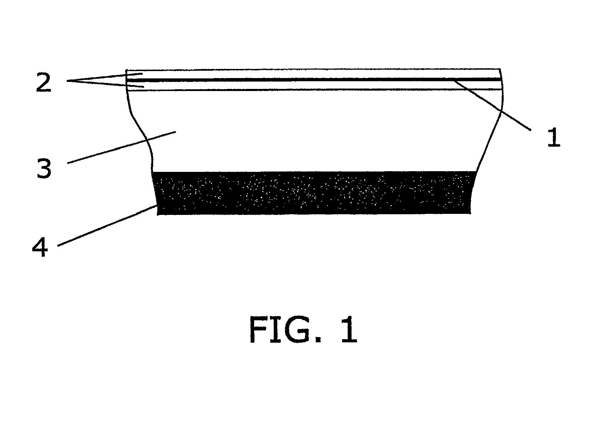

Figure 1 is a schematic representation of the cross section of the decorative board.

### PREFERRED EMBODIMENT OF THE INVENTION

In the light of the above explanation, the present invention consists of a multi-layer decorative board.

This multi-layer board consists of a laminate (1) of porous cellulose or of synthetic fibre mats the upper surface of which is imprinted with an image, typically a wood grain.

The printed laminate (1) is impregnated with melamine resin (2) shown with a greater thickness in figure 1 for illustrative purposes.

The melamine resin (2) spread on the exterior face contributes the shine or varnished appearance to the resulting board, and the resin (2) spread on the internal face serves so that the printed decorative laminate (1) adheres to a supporting thermoset or thermoplastic sheet (3).

By means of a press and at the fusion temperature of the melamine (2), the printed laminate (1) is bonded to the transparent plastic supporting sheet (3).

After the fusion, an interface area exists in which there is a degree of diffusion of the melamine (2) in the plastic supporting sheet (3).

Additionally, when it is required that the board so obtained be of greater thickness, on the part opposite the decorative laminate (1) a second plastic laminate (4) is incorporated by adherence.

The bonding of this laminate (4), is carried out either like that of the decorative laminate (1) by means of impregnation with melamine resin that is fused in the hot press, or by means of another type of adhesive.

## Claims

1. Decorative board of among the multi-layer boards with decorative exterior laminate (1) of porous cellulose or of synthetic fibre mats printed with decorative motifs, and impregnated with melamine resin (2) and bonded to a support layer (3) **characterised in that** the support layer (3) is constituted by a transparent thermoset or thermoplastic sheet (3) on which the laminate (1) is bonded by means of a hot press at the fusion temperature of the melamine resin (2).

2. Decorative board according to claim 1, **characterized in that** additionally to the thermoset or thermoplastic decorative sheet (3) another laminate (4) is bonded underside by means of an adhesive.

3. Decorative board according to claim 2, **characterised in that** the bond between the transparent laminate (3) and the underside laminate (4) is carried out by means of impregnation with melamine resin that is fused in the hot press.

## Patentansprüche

1. Zierplatte unter den Mehrlagen-Platten mit dekorativem Außenlaminat (1) aus poröser Zellulose oder aus synthetischen Fasermatten, mit dekorativen Motiven bedruckt und mit Melaminharz (2) imprägniert und mit einer Trägerschicht (3) verbunden, **dadurch gekennzeichnet, dass** die Trägerschicht (3) durch einen transparenten Thermoplast oder eine thermoplastische Folie (3) gebildet ist, womit das Laminat (1) mithilfe einer Heißpresse bei der Schmelztemperatur des Melaminharzes (2) verbunden ist.

2. Zierplatte nach Anspruch 1, **dadurch gekennzeichnet, dass** zusätzlich zum Thermoplast oder zur thermoplastischen Folie (3) ein weiteres Laminat (4) mithilfe eines Klebers mit der Unterseite verbunden ist.

3. Zierplatte nach Anspruch 2, **dadurch gekennzeichnet, dass** die Verbindung zwischen dem transparenten Laminat (3) und dem Laminat der Unterseite (4) mithilfe einer Imprägnierung mit Melaminharz erfolgt, das in der Heißpresse geschmolzen wird.

## Revendications

1. Panneau décoratif parmi les panneaux multicouches à lame extérieure décorative (1) en cellulose poreuse ou natte de fibres synthétiques à impression de motifs décoratifs et imprégnée avec de la résine de mélamine (2) et liée à une couche de support (3) **caractérisé par le fait que** la couche de support (3) est constituée d'une lame thermoplastique ou thermodurcie transparente (3) sur laquelle est assemblée la lame (1) par pressage à chaud à la température de fusion de la résine de mélamine.(2)

2. Panneau décoratif selon revendication 1, **caractérisé par le fait qu'**en plus de la lame décorative thermoplastique ou thermodurcie (3), une autre lame (4) est unie à sa partie inférieure au moyen d'un adhésif.

3. Panneau décoratif selon revendication 2, **caractérisé par le fait que** la liaison entre la lame transparente (3), et la lame inférieure (4) est réalisée au moyen d'une imprégnation avec de la résine de mélamine fondue dans la presse à chaud.
